# EUROPEAN PATENT SPECIFICATION

(11) **EP 3 040 564 B1**
(45) Date of publication and mention of the grant of the patent: **30.12.2020**
(21) Application number: 14840184.7
(22) Date of filing: 25.07.2014
(51) Int. Cl.: F16B 31/04, F02F 1/00

(54) **TIGHTENING STRUCTURE FOR CYLINDER HEAD BOLT**
FESTZIEHSTRUKTUR FÜR ZYLINDERKOPFSCHRAUBE
STRUCTURE DE SERRAGE POUR BOULON DE CULASSE

(30) Priority: 26.08.2013 JP 2013174584
(43) Date of publication of application: 06.07.2016
(73) Proprietor: Kawasaki Jukogyo Kabushiki Kaisha, Kobe-shi, Hyogo 650-8670 (JP)
(72) Inventor: SOEDA, Akira, Akashi-shi Hyogo 673-8666 (JP)
(74) Representative: Dr. Gassner & Partner mbB
(86) International application number: PCT/JP2014/069719
(87) International publication number: WO 2015/029663

(56) References cited:
- EP-A2- 2 599 987
- DE-U1- 29 720 094
- JP-A- S61 136 013
- JP-A- S61 136 013
- JP-A- 2001 187 911
- JP-A- 2001 187 911
- JP-U- 3 043 382
- JP-U- H0 240 949
- JP-U- H0 240 949
- JP-U- S5 197 603
- US-A- 5 105 777

## Description

### CROSS REFERENCE TO THE RELATED APPLICATION

This application is based on and claims Convention priority to Japanese patent application No. 2013-174584, filed August 26, 2013.

### BACKGROUND OF THE INVENTION

### (Field of the Invention)

The present invention relates to an engine, comprising a tightening structure for a cylinder head bolt, which is used in fastening or tightening a cylinder head bolt, inserted through a cylinder head, into either a cylinder or a crankcase, both forming respective parts of an engine casing, to thereby firmly connect the cylinder head with the engine casing.

### (Description of Related Art)

US 5 105 777 A discloses a conventional combustion engine, comprising a tightening structure for a cylinder head bolt. In addition, the following prior art documents also disclose tightening structures for an engine: EP 2 599 987 A2, JP 2001 187911 A, DE 297 20094 U1, JP S61 136013A, JP H02 40949 U.

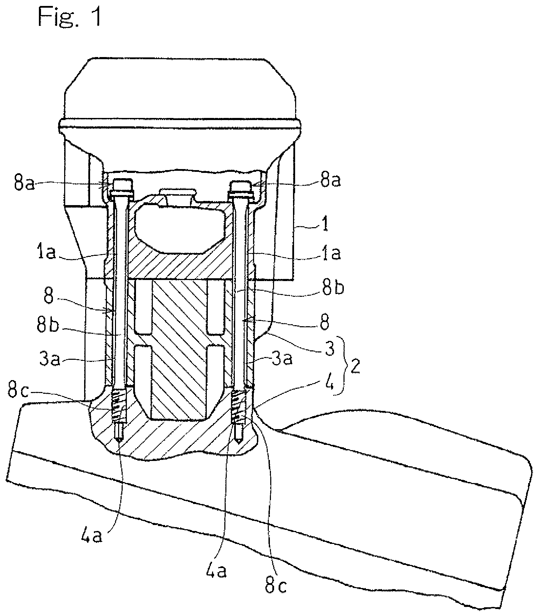

For example, in the assembly line of combustion engines for use in motorcycles, as shown in Fig. 1, when a cylinder head 1 is connected with an engine casing 2 including a cylinder 3 and a crankcase 4, a relatively elongated cylinder head bolt 8 is, after having been passed through an insertion hole 1a defined in the cylinder head 1 and then through a insertion hole 3a defined in the cylinder 3, threaded into a threaded hole 4a defined in the crankcase 4. By so doing, the cylinder head 1 and the crankcase 4 are connected together with the cylinder 3 interposed between the cylinder head 1 and the crankcase 4. In this connection, see the patent document 1 listed below.

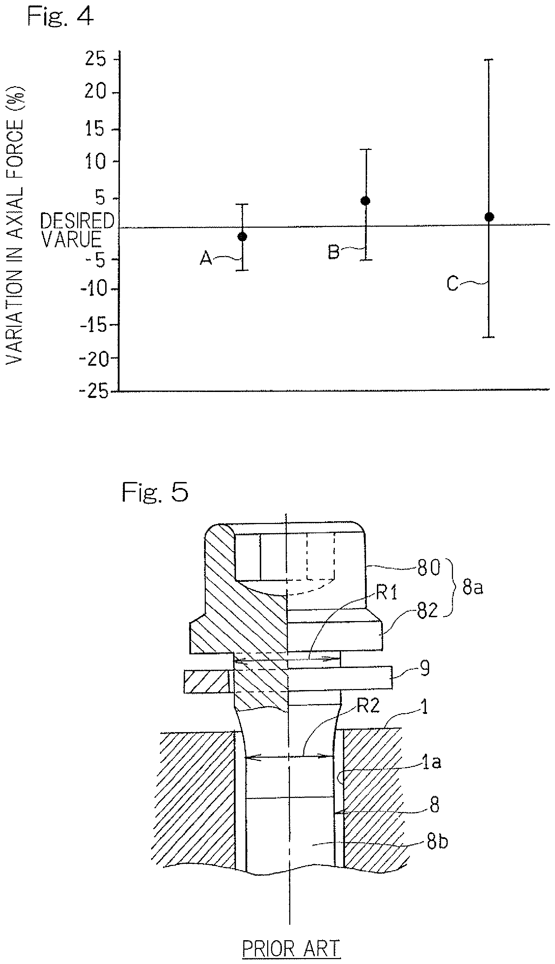

As the cylinder head bolt 8 generally used in such a tightening structure as discussed above, as shown in Fig. 5 showing the conventional tightening structure, a tension bolt is utilized. The tension bolt 8 has at an upper end portion a rotation operating part 8a and at a lower end portion a male threaded region (shown in Fig. 1). Further, the tension bolt has a columnar part 8b situated intermediate between the upper and lower end portions. The outer diameter R2 of the columnar part 8b is smaller than the outer diameter R1 of the upper end portion and the outer diameter of the lower end portion. When this cylinder head bolt 8 in the form of the tension bolt discussed above is fastened, a large elongation is generated in the intermediate columnar part 8b of the smaller outer diameter. An axially acting force of a significant tension is brought about by the restoring force induced upon generation of such an elongation. The cylinder head and an engine casing 2 (shown in Fig. 1) is firmly connected together by such an axially acting restoring force. It is to be noted that a plain washer 9 is employed under a head of the cylinder head bolt 8.

Step-by-step measurement of the axially acting force generated in the cylinder head bolt 8 during the assemblage of the automotive engine results in increase of hours of work. Accordingly, the axial force of the cylinder head bolt 8 is controlled by the tightening torque that can be directly measured with a torque wrench for tightening the cylinder head bolt 8.

### [Prior Art Literature]

Patent Document 1: Japanese Patent No. JP 3305615 B2

It has however been found that with the above discussed tightening structure, the axial force of the cylinder head bolt 8 is scattering considerably. As a result that the inventors of the present invention have committed a series of studies and experiments to find the cause of the scattering of the axial force, the following facts have been found. Specifically, with the conventional tightening structure for the cylinder head bolt 8 in the form of the tension bolt, a work to tighten such bolt 8 involves the following events (1) to (3): event (1) the bolt 8 and the plain washer 9 rotate together in the same direction while the plain washer 9 slips on a bearing face of the cylinder head 1, with the consequence that a sliding face occurs in an undersurface of the washer 9; event (2) the bolt 8 slidingly rotates relative to the plain washer 9 with the consequence that a sliding face occurs in a top face of the plain washer 9; and event (3) the sliding face changes from top to bottom, and vice versa. Those events (1) to (3) takes place randomly.

Since the sliding surface is erratic as discussed above, even though the tightening torque of the cylinder head bolt 8 is within the stipulated range, as compared with the case in which the sliding surface is stable, the axial force tends to take a value departing from the standard value. Therefore, the axial force varies so considerably as to result in loosening occurring in the cylinder head bolt 8.

The reason for the variation of the axial force is mentioned below. The cylinder head 1 is made of aluminum, and the cylinder head bolt 8 and the plain washer 9 are made of iron and are subjected to the surface treatment. Accordingly, material and surface roughness of frictional surfaces between these members 1, 8 and 9 are different from each other and, hence, surface conditions of the frictional surfaces are different from each other. As a result, frictional coefficients are different form each other, and the variation of the axial force is generated.

### SUMMARY OF THE INVENTION

In view of the foregoing, the present invention has been devised to substantially eliminate the foregoing problems and inconveniences and is intended to provide an engine comprising a tightening structure for a cylinder head bolt, which is so designed as to enable a substantially constant axial force to be obtained.

In order to accomplish the foregoing object, the present invention provides an engine comprising a tightening structure for a cylinder head bolt with the features of claim 1. The engine comprising the tightening structure is configured to tighten a cylinder head to an engine casing by threadingly engaging a cylinder head bolt, which has been inserted through the cylinder head, into the engine casing including the cylinder and a crankcase. The tightening structure for the cylinder head bolt referred to above includes a plain washer and a spring member placed over the plain washer to exert a spring force in an axial direction of the bolt, and the plain washer and the spring member are disposed between a rotation operating part provided in a head of the cylinder head bolt and an upper surface of the cylinder head. In the tightening structure discussed above, a first frictional resistance between the rotation operating part of the cylinder head bolt and the spring member is chosen to be lower than a second frictional resistance between the spring member and the plain washer and a third frictional resistance between the plain washer and a bearing surface defined on the upper surface of the cylinder head. It is to be noted that the frictional resistance means a resistance force as measured under the static friction taking place and is determined depending on the contact surface area, material, surface roughness and others, but the contact surface area is dominantly controlling.

According to the above described engine comprising the tightening structure for the cylinder head bolt, when the cylinder head bolt is tightened, a high frictional resistance is developed between the spring member and the plain washer and also between the plain washer and the bearing surface of the cylinder head to such an extent as to make it difficult to slip. Therefore, the slip tends to occur between the rotation operating part of the cylinder head bolt and the spring member, due to the low frictional resistance. Since the site susceptible to slip is specified in the manner as described above, variation in axial force occurring in the cylinder head bolt after the tightening is reduced. It is to be noted that, while the insertion of the spring member in the bolt has hitherto been practiced, it has been for the purpose of preventing an undesirable loosening of the bolt. In contrast thereto, in the practice of the present invention, the use of the spring member is for the purpose of securing a constant axially acting force.

In one preferred embodiment of the present invention, the spring member referred to above may be in the form of a coned disc spring. Since the coned disc spring, when in a free state prior to the tightening of the cylinder head bolt, is held in circular linear contact with a round area of the bearing surface of the cylinder head bolt, the first frictional resistance is low. Also, at the time of completion of the tightening, the outer diameter of the coned disc spring is preferably set to a value greater than the outer diameter of the rotation operating part. Thus, the contact surface area between the rotation operating part and the coned disc spring is rendered to be small enough to reduce the first frictional resistance therebetween. Accordingly, the slip is apt to occur between the rotation operating part and the coned disc spring. Also, the coned disc spring is free from any sharp site which would bring about damages when the bearing surface of the cylinder head bolt and the plain washer are brought into contact with each other. Accordingly, there is such an advantage that, when a pressing force resulting from the tightening of the cylinder head bolt is applied, the coned disc spring is deformed smoothly to assume a flattened shape.

In another preferred embodiment of the present invention, the cylinder head bolt may be in the form of a tension bolt in which an intermediate columnar part has an outer diameter smaller than an upper end portion, provided with the rotation operating part, and a lower end portion provided with a male threaded region. Axial elongation is generated in the cylindrical columnar part having a small diameter, when the cylinder head bolt is being tightened, to thereby generate an axially acting force. The tension bolt will firmly connect the cylinder head and the engine casing together by the effect of a considerable tension brought about by a resilient force of restoration developed as a result of the axially acting force.

In a further preferred embodiment of the present invention, the cylinder head bolt may be threadingly engaged with the crankcase while having been passed through the cylinder. If the cylinder and the crankcase, both forming the engine casing, are provided as members separate from each other, threading the cylinder head bold into the crankcase is effective to connect the cylinder head and the crankcase together with the cylinder intervening therebetween.

In a still further preferred embodiment of the present invention, the cylinder head bolt may be formed integrally with a head that forms the rotation operating part. According to the use of the cylinder head bolt having the head formed integrally therewith, the cylinder head can be threadingly connected with the engine casing, with no need to use any stud bolt.

In a still further preferred embodiment of the present invention, where the cylinder head bolt having the head formed integrally therewith is used, the cylinder head bolt may be in the form of a collar head bolt having a disc shaped collar provided in a lower portion of the head, in which the outer diameter of the collar, when in a free state, is greater than the outer diameter of the spring member. According to the collar head bolt for the cylinder head bolt, when the cylinder head bolt is tightened through the head forming the rotation operating part, the spring member can be smoothly deformed into the flattened shape by the effect of a pressing force exerted by the disc shaped collar of the cylinder head bolt, with the outer diameter of the collar being greater than that of the spring member.

In a still further preferred embodiment of the present invention, the plain washer may have a layer of copper plating applied to a ferrous material. According to the use of the plain washer having the layer of copper plating applied to a ferrous material, the spring member is bitten by the soft copper plating applied to the plain washer and therefore, the plain washer hardly slides relative to the spring member. As a result, the site at which the slip takes place can be further assuredly set up at a positon between the rotation operating part of the cylinder head bolt and the spring member.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic front elevational view, with a portion broken, showing a portion of an engine comprising a tightening structure for a cylinder head bolt according to the present invention;
Fig. 2A is a schematic sectional view of an important portion of the tightening structure for the cylinder head bolt according to a first preferred embodiment of the present invention, with the tightening structure shown in a condition before being tightened;
Fig. 2B is a schematic sectional view of the important portion of the tightening structure for the cylinder head bolt shown in a condition after having been tightened;
Fig. 3A is schematic sectional view of an important portion of the tightening structure for the cylinder head bolt according to a second preferred embodiment of the present invention, with the tightening structure shown in a condition before being tightened;
Fig. 3B is a schematic sectional view of the important portion of the tightening structure for the cylinder head bolt shown in a condition after having been tightened;
Fig. 4 is a chart showing variations of an axially acting force of the cylinder head bolt which are exhibited as a result of experiments conducted on the first and second preferred embodiments of the present invention; and
Fig. 5 is a schematic longitudinal sectional view showing the conventional tightening structure for the cylinder head bolt.

### DESCRIPTION OF PREFERRED EMBODIMENTS

Hereinafter, preferred embodiments of the present invention will be described with particular reference to the accompanying drawings.

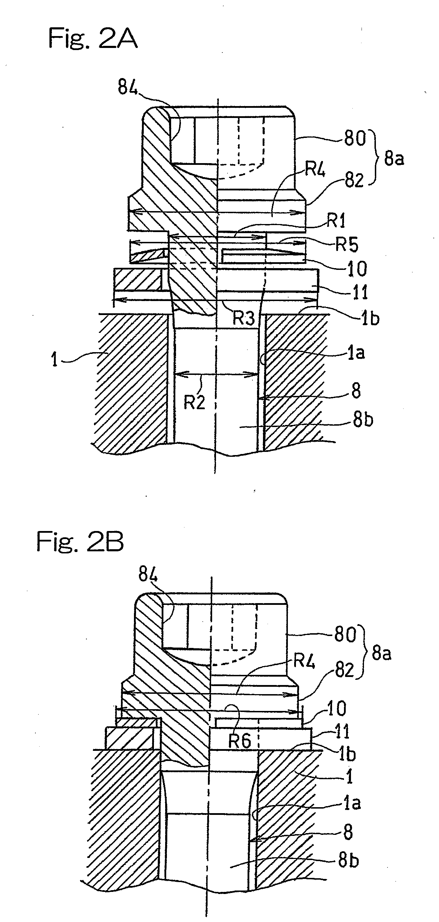

According to a first preferred embodiment of the present invention shown in Fig. 1, a conventionally used cylinder head bolt 8 is used to connect a cylinder head 1 and a cylinder 3 to a crankcase 4. As shown in Fig. 2A, this cylinder head bolt is a tension bolt including a rotation operating part 8a and a shaft shaped member, in which the intermediate columnar part 8b has an outer diameter R2 smaller than the outer diameter R1 of an upper end portion, provided with the rotation operating part 8a, and the outer diameter of a lower end portion, which is provided with a male threaded region 8c (shown in Fig. 1). It is to be noted that the outer diameter of the male threaded region 8c formed in the lower end portion of the shaft shaped member of the cylinder head bolt 8 is, although not shown, substantially equal to the outer diameter R1 of the upper end portion.

Also, the cylinder head bolt 8 referred to above is a so-called collar head bolt, in which a head 80 is formed integrally with the upper end portion of the shaft shaped member and a disc shaped collar 82 is defined below the head 80. The head 80 has a hexagonal hole 84 defined therein for accommodating a torque wrench for rotation operating purpose. The head 80 and the collar 82 altogether constitute the rotation operating part 8a. It is to be noted that a plain washer 11 is made of a ferrous material and has a surface that is copper plated.

In this tightening structure, between the collar 82, provided in a lower portion of the head 80 of the cylinder head bolt 8, and an upper face of the cylinder head 1, a plain washer 11 and a coned disc spring 10 overlapping the plain washer 11 are disposed. The coned disc spring 10 forms a spring member that is deformed to represent a flat shape when the cylinder head bolt 8 is tightened, but exerts a spring force in an axial direction by the effect of a resilient force of restoration thereof. The outer diameter R4 of the collar 82 of the cylinder head bolt 8, that is, the outer diameter R4 of the rotation operating part 8a is so stipulated as to be slightly greater than the diameter R5 of the coned disc spring 10 in a free state before tightening takes place, but to be smaller than the outer diameter R3 of the plain washer 11.

When the cylinder head 1 shown in Fig. 1 is to be fastened to a crankcase 4 of an engine casing 2, after the shaft shaped member has been inserted into an insertion hole 1a, defined in the cylinder head 1, and also into an insertion hole 3a, defined in the cylinder 3, the male threaded region 8c of the shaft shaped member is threaded into a threaded hole 4a defined in the crankcase 4. At this time, by turning a torque wrench, then engaged with the rotation operating part 8a of the cylinder head bolt 8, the cylinder head bolt 8 is threadingly driven. The magnitude of the driving torque of the cylinder head bolt 8 is displayed in the torque wrench. This driving torque is proportional to the axially acting force.

At the termination of tightening of the cylinder head bolt 8, at which the axially acting force is generated in the cylinder head bolt 8, the coned disc spring 8, then pressed from top and bottom, is deformed to represent a flat shape as shown in Fig. 2B. As a result, the outer diameter R6 of the coned disc spring 8 consequently increases to a value greater than the outer diameter R4 of the collar 82 of the cylinder head bolt 8. The outer diameter R3 of the plain washer 11 is furthermore greater than the outer diameter R6 of the coned disc spring 10 then having been flattened. As a result thereof, the contact surface area S2 between the coned disc spring 10 and the plain washer 11 becomes greater than the contact surface area S1 between the collar 82 and the coned disc spring 10. Also, the contact surface area S3 between the plain washer 11 and a bearing surface 1b on an upper face of the cylinder head 1 become furthermore greater than the contact surface area S2 between the plain washer 11 and the coned disc spring 10. In other words, the relationship of S1 < S2 < S3 thus establishes.

Along with this relationship, the frictional resistance between the coned disc spring 10 and the plain washer 11 and the frictional resistance between the plain washer 11 and the cylinder head 1 increase correspondingly, resulting in a slip taking place hardly. It is however to be noted that the contact surface area S2 may be made larger than the contact surface area S3 to establish the relationship of S1 < S3 < S2. Since the frictional resistances referred to above are affected by the material and the surface roughness besides the contact surface area, considering those influences the magnitude of frictional resistance among the collar 82, the coned disc spring 10 and the plain washer 11 is to be specified.

The slip referred to above is apt to occur between the coned disc spring 10 and the rotation operating part 8a of the cylinder head bolt 8, due to a lower frictional resistance because of its small contact surface area. As the site where the slip occurs in the manner described above is identified, the variation in axially acting force induced in the cylinder head bolt 8 after the latter has been tightened is rendered to be small. It is to be noted that although the interposition of a spring member such as the coned disc spring 10 on the bolt has hitherto been made, the present invention makes use of the spring member for the purpose of obtaining a constant axially acting force whereas according to the conventional practice the spring member has hitherto been used for preventing loosening of the bolt.

In the practice of this preferred embodiment now under discussion, the coned disc spring 10 is employed as the spring member. The coned disc spring 10, when in the free state before the cylinder head bolt 8 is tightened, has a round inner peripheral portion held in circular linear contact with the undersurface of the collar 82 that is a bearing surface for the cylinder head bolt 8. Therefore, the contact surface area between the coned disc spring 10 and the collar 82 is small. Along with the small contact surface area, the frictional resistance between the coned disc spring 10 and the collar 82 is rendered to be low, and therefore, the cylinder head bolt 8 during execution of the tightening work is apt to rotate while sliding. Also, the coned disc spring 10 has no sharp site which may, when the coned disc spring 10 contacts the bearing surface of the cylinder head bolt 8 and the plain washer 11, give rise to damages. Accordingly, such an advantage can be appreciated that, when a pressing force is applied as a result of tightening of the cylinder head bolt 8, it is crushed from top and bottom to eventually deform smoothly into a flat shape.

As the cylinder head bolt 8, a tension bolt is employed in which the intermediate columnar part 8b of the shaft shaped member has the outer diameter R2 that is smaller than the outer diameter R1 of the upper end portion of the shaft shaped member, provided with the rotation operating part 8a, and the outer diameter of the lower end portion thereof provided with the male threaded region 8c (best shown in Fig. 1). In this tension bolt, the intermediate columnar part 8b having the small outer diameter, when the cylinder head bolt 8 is tightened, will elongate considerably in the axial direction. This tension bolt serves to firmly connect the cylinder head 1, shown in Fig. 1, and the engine casing 2 together by means of the axially acting force generated when tensioned by the resilient force of restoration.

In the embodiment now under discussion the cylinder 3 and the crankcase 4, both cooperating to form the engine casing 2, are members separate from each other. The cylinder head bolt 8 is, after having been inserted through the insertion hole 1a in the cylinder head 1 and then through the insertion hole 3a in the cylinder 3, threaded into the threaded hole 4a defined in the crankcase 4. Accordingly, the cylinder head 1 and the crankcase 4 can be connected together in a fashion with the cylinder 3 intervening therebetween. It is to be noted that where the engine casing 2 is of a type in which the cylinder 3 and the crankcase 4 are integrally formed, the cylinder head bolt 8 having inserted into the insertion hole in the cylinder head 1 is threaded into a threaded hole, provided in the cylinder 3, to connect the cylinder head 1 together with the engine casing 2.

Since the head 80 of the cylinder head bolt 8, forming the rotation operating part 8a, is integrally formed in the upper end portion of the shaft shaped member, the cylinder head 1 and the engine casing 2 can be connected together even without any stud bolt used. In addition thereto, the cylinder head bolt 8 is in the form of a collar head bolt in which the collar 82 of a disc shape is provided in a lower portion of the head 80 and the outer diameter R4 of the collar 82 is chosen to be greater than the outer diameter R5 of the coned disc spring 10 in the free state. Accordingly, when tightening of the cylinder head bolt 8 is carried out through the rotation operating part 8a including the head 80, the coned disc spring 10 can be smoothly flattened to represent the flat shape by the effect of the pressing force exerted by the disc shaped collar 82 of the cylinder head bolt 8, with the outer diameter R4 being greater than the outer diameter R5 of the coned disc spring 10.

Also, in the practice of the preferred embodiment, the plain washer 11 is made of a ferrous material and has a copper plated surface. This plain washer 11 would hardly slide relative to the coned disc spring 10, since the coned disc spring 10 is bitten into a soft copper plating applied to the plain washer 11. Accordingly, the site at which the slip takes place can be further assuredly set up at a positon between the rotation operating part 8a of the cylinder head bolt 8 and the coned disc spring 10.

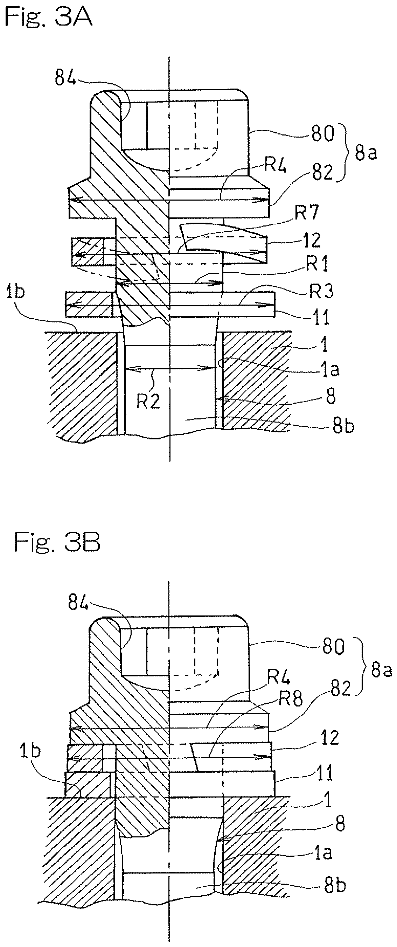

Figs. 3A and 3B illustrate schematic longitudinal sectional views of a second preferred embodiment of the present invention. Fig. 3A shows the cylinder head bolt tightening structure in a condition before being tightened, and Fig. 3B shows it in a condition after having been tightened. In those figures, component parts shown in and described with reference to one of Figs. 3A and 3B, which are similar to component parts shown in and described with reference to the other of Figs. 2A and 2B, are designated by like reference numerals and, therefore, description of those shown in either of those figures are not reiterated for the sake of brevity. The cylinder bolt tightening structure shown in Figs. 3A and 3B according to this second embodiment differs from that according to the previously discussed first preferred embodiment in that as a spring member, the coned disc spring 10 employed in the first embodiment is replaced with a spring washer 12.

In the practice of the second preferred embodiment, between the collar 82 provided in the lower portion of the head 80 of the cylinder head bolt 8 and the upper face of the cylinder head 1, the plain washer 11 and the spring washer 12 overlapping the plain washer 11 are disposed. The spring washer 12 forms the spring member capable of being deformed to represent a flat shape, when the cylinder head bolt 8 is tightened, to thereby exert a resilient force of restoration with which an axially acting spring force is generated. As shown in Fig. 3A, the outer diameter R4 of the collar 82 of the cylinder head bolt 8 is so chosen to be slightly greater than the outer diameter R7 of the spring washer 12 in the free state before the cylinder head bolt 8 is tightened, but smaller than the outer contour R3 of the plain washer 11.

Accordingly, even in the tightening structure according to this second embodiment, effects similar to those afforded by the previously described first embodiment can be obtained. Specifically, at the time of completion of the bolt tightening which is accomplished by tightening the cylinder head bolt 8 to allow the cylinder head bolt 8 to exert the axially acting force, as shown in Fig. 3B, the spring washer 12 is pressed from top and bottom to deform into the flat shape. Thus, the outer diameter R8 of the spring washer 12 is consequently increased to a value greater than the outer diameter R4 of the collar 82 of the cylinder head bolt 8. As a result, the contact surface area between the spring washer 12 and the plain washer 11 is increased and, correspondingly, the frictional resistance developed between the spring washer 12 and the plain washer 11 is increased to such an extent that the slip will hardly occur. The slip referred to above is apt to occur between the rotation operating part 8a of the cylinder head bolt 8 and the spring washer 12, due to the small contact surface area, that is, a low frictional resistance.

With the site of slip identified as discussed above, the variation in the axially acting force induced in the cylinder head bolt 8 after the latter has been tightened is reduced. It is to be noted that, even in the practice of the second embodiment, the spring washer 12 is utilized for maintaining the axially acting force, induced in the bolt, at a constant value in contrast to the conventional practice in which the spring washer is used solely for preventing loosening of the bolt.

Fig. 4 illustrates a chart showing variations of the axially acting force of the cylinder head bolt which are exhibited as a result of experiments conducted on the first and second preferred embodiments. Specifically, in the chart of Fig. 4, a range A represents a result of experiment conducted on the previously described first embodiment whereas a range B represents a result of experiment conducted on the previously described second embodiment. For comparison purpose, a result of experiment conducted on the conventional tightening structure shown in Fig. 5 is shown by a range C in the chart of Fig. 4. In those ranges A, B and C, a blackened dot represents the average value. All of the cylinder head bolts 8 used during the experiments have been tightened to a constant torque. As Fig. 4 makes it clear, with the tightening structure designed according to the first embodiment, it has been confirmed that the variation of the axially acting force generated by the cylinder head bolt 8 was considerably reduced as compared with that exhibited by the conventional tightening structure. Also, although the tightening structure designed according to the second preferred embodiment presented somewhat larger variation occurring in the axially acting force generated by the cylinder head bolt 8 as compared with that exhibited by the tightening structure according to the first preferred embodiment, it is clear that the variation of the axially acting force generated by the cylinder head bolt 8 is substantially reduced as compared with the conventional tightening structure.

The present invention can be equally applied to a tightening structure for a stud bolt, In such case, a nut threadingly engaged with the upper end portion of the stud bolt forms the rotation operating part referred to in connection with the present invention.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### Reference Numerals

- 1 · · · ·: Cylinder head
- 1b · · · ·: Bearing surface
- 2 · · · ·: Engine casing
- 3 · · · ·: Cylinder
- 4 · · · ·: Crankcase
- 8 · · · ·: Cylinder head bolt
- 8a · · · ·: Rotation operating part
- 8b · · · ·: Columnar part
- 8c · · · ·: Male threaded region
- 80 · · · ·: Head
- 82 · · · ·: Collar
- 10 · · · ·: Coned disc spring (Spring member)
- 11 · · · ·: Plain washer
- 12 · · · ·: Spring washer (Spring member)

## Claims

1. Engine, comprising a tightening structure for a cylinder head bolt (8) to tighten a cylinder head (1) to an engine casing (2) by threadingly engaging a cylinder head bolt (8), which has been inserted through the cylinder head (1), into the engine casing (2) including the cylinder (3) and a crankcase (4), the tightening structure comprising a plain washer (11), wherein said tightening structure comprises:
a spring member placed over the plain washer (11) to exert a spring force in an axial direction of the bolt, the plain washer (11) and the spring member being disposed between a rotation operating part (8a) provided in a head (80) of the cylinder head bolt (8) and an upper surface of the cylinder head (1), wherein
the cylinder head bolt (8) comprises a tension bolt in which an intermediate columnar part (8b) has an outer diameter (R2) smaller than the outer diameter (R1) of an upper end portion, provided with the rotation operating part (8a), and a lower end portion provided with a male threaded region (8c), wherein the spring member comprises a coned disc spring (10), and the outer diameter (R6) of the coned disc spring (10) at the time of completion of tightening is set to a value greater than the outer diameter (R4) of the rotation operating part (8a) and smaller than an outer diameter (R3) of the plain washer (11),
**characterized in that** a first frictional resistance between the rotation operating part (8a) of the cylinder head bolt (8) and the spring member is chosen to be lower than a second frictional resistance between the spring member and the plain washer (11) and a third frictional resistance between the plain washer (11) and a bearing surface (1b) defined on the upper surface of the cylinder head (1), and
a contact surface area (S2) between the coned disc spring (10) and the plain washer (11) is greater than a contact surface area (S1) between a disc shaped collar (82), provided in a lower portion of the head (80), and the coned disc spring (10), and
a contact surface area (S3) between the plain washer (11) and a bearing surface (1b) on an upper face of the cylinder head (1) is greater than the contact surface area (S2).

2. The engine as claimed in claim 1, wherein the cylinder head bolt (8) is threadingly engaged with the crankcase (4) while having been passed through the cylinder (3).

3. The engine as claimed in claim 1 or 2, wherein the cylinder head bolt (8) is formed integrally with a head (80) that forms the rotation operating part (8a).

4. The engine as claimed in claim 3, wherein the cylinder head bolt (8) comprises a collar head bolt having the disc shaped collar (82) provided in a lower portion of the head (80), and the outer diameter (R4) of the collar (82), when in a free state, is greater than the outer diameter of the spring member.

5. The engine as claimed in any one of claims 1 to 4, wherein the plain washer (11) has a layer of copper plating applied to a ferrous material.

## Patentansprüche

1. Motor, umfassend eine Anziehstruktur für eine Zylinderkopfschraube (8) zum Festziehen eines Zylinderkopfes (1) an einem Motorgehäuse (2) durch Gewindeeingriff einer Zylinderkopfschraube (8), die durch den Zylinderkopf (1) in das Motorgehäuse (2), das den Zylinder (3) und ein Kurbelgehäuse (4) aufweist, eingeführt worden ist, wobei die Anziehstruktur eine Unterlegscheibe (11) umfasst, wobei die Anziehstruktur umfasst:
ein Federelement, das oberhalb der Unterlegscheibe (11) angeordnet ist, um eine Federkraft in axialer Richtung der Zylinderkopfschraube auszuüben, wobei die Unterlegscheibe (11) und das Federelement zwischen einem Drehbetätigungsteil (8a), das in einem Kopf (80) der Zylinderkopfschraube (8) vorgesehen ist, und einer oberen Fläche des Zylinderkopfes (1) angeordnet sind, wobei
die Zylinderkopfschraube (8) eine Spannschraube ist, bei der ein säulenförmiger Zwischenteil (8b) einen Außendurchmesser (R2) aufweist, der kleiner ist als der Außendurchmesser (R1) eines oberen Endabschnitts, der mit dem Drehbetätigungsteil (8a) versehen ist, und einen unteren Endabschnitt, der mit einem Außengewindebereich (8c) versehen ist, wobei das Federelement eine konische Tellerfeder (10) umfasst und der Außendurchmesser (R6) der konischen Tellerfeder (10) zum Zeitpunkt des Abschlusses des Festziehens auf einen Wert festgelegt ist, der größer als der Außendurchmesser (R4) des Drehbetätigungsteils (8a) und kleiner als ein Außendurchmesser (R3) der Unterlegscheibe (11) ist,
**dadurch gekennzeichnet, dass** ein erster Reibungswiderstand zwischen dem Drehbetätigungsteil (8a) der Zylinderkopfschraube (8) und dem Federelement so gewählt ist, dass er geringer ist als ein zweiter Reibungswiderstand zwischen dem Federelement und der Unterlegscheibe (11) und ein dritter Reibungswiderstand zwischen der Unterlegscheibe (11) und einer auf der Oberseite des Zylinderkopfs (1) definierten Auflagefläche (1b), und
wobei ein Kontaktflächenbereich (S2) zwischen der Kegeltellerfeder (10) und der Unterlegscheibe (11) größer ist als ein Kontaktflächenbereich (S1) zwischen einem scheibenförmigen Bund (82), der in einem unteren Abschnitt des Kopfes (80) vorgesehen ist, und der Kegeltellerfeder (10), und
wobei eine Kontaktfläche (S3) zwischen der Gleitscheibe (11) und einer Lagerfläche (1b) auf einer Oberseite des Zylinderkopfes (1) größer als die Kontaktfläche (S2) ist.

2. Motor nach Anspruch 1, bei dem die Zylinderkopfschraube (8) in Gewindeeingriff mit dem Kurbelgehäuse (4) steht, wenn sie durch den Zylinder (3) hindurchgeführt ist.

3. Motor nach Anspruch 1 oder 2, bei dem die Zylinderkopfschraube (8) einstückig mit einem Kopf (80) ausgebildet ist, der das Drehbetätigungsteil (8a) bildet.

4. Motor nach Anspruch 3, wobei die Zylinderkopfschraube (8) eine Kragenkopfschraube mit einem scheibenförmigen Kragen (82) aufweist, der in einem unteren Abschnitt des Kopfes (80) vorgesehen ist, wobei der Außendurchmesser (R4) des Kragens (82) im nicht verschraubten Zustand größer ist als der Außendurchmesser des Federteils.

5. Motor nach einem der Ansprüche 1 bis 4, bei dem die Unterlegscheibe (11) eine auf einem Eisenwerkstoff aufgebrachte Kupferschicht aufweist.

## Revendications

1. Moteur, comprenant une structure de serrage pour un boulon de culasse (8) pour serrer une culasse (1) sur un carter de moteur (2) par engagement par filetage d'un boulon de culasse (8), qui a été inséré à travers la culasse (1), dans le carter de moteur (2) incluant le cylindre (3) et un carter de vilebrequin (4), la structure de serrage comprenant une rondelle plate (11), dans lequel ladite structure de serrage comprend :
un organe ressort placé au-dessus de la rondelle plate (11) pour exercer une force de ressort dans une direction axiale du boulon, la rondelle plate (11) et l'organe ressort étant disposés entre une partie de manœuvre de rotation (8a) prévue dans une tête (80) du boulon de culasse (8) et une surface supérieure de la culasse (1), dans lequel
le boulon de culasse (8) comprend un boulon de tension dans lequel une partie colonnaire intermédiaire (8b) a un diamètre extérieur (R2) plus petit que le diamètre extérieur (R1) d'une partie d'extrémité supérieure, pourvue de la partie de manœuvre de rotation (8a), et une partie d'extrémité inférieure pourvue d'une zone filetée mâle (8c), dans lequel l'organe ressort comprend un ressort à disque à cône (10), et le diamètre extérieur (R6) du ressort à disque à cône (10) au moment de la réalisation du serrage est fixé à une valeur supérieure au diamètre extérieur (R4) de la partie de manœuvre de rotation (8a) et inférieure à un diamètre extérieur (R3) de la rondelle plate (11),
**caractérisé en ce qu'**une première résistance de frottement entre la partie de manœuvre de rotation (8a) du boulon de culasse (8) et l'organe ressort est choisie pour être inférieure à une deuxième résistance de frottement entre l'organe ressort et la rondelle plate (11) et à une troisième résistance de frottement entre la rondelle plate (11) et une surface d'appui (1b) définie sur la surface supérieure de la culasse (1), et
une superficie de surface de contact (S2) entre le ressort à disque à cône (10) et la rondelle plate (11) est plus grande qu'une superficie de surface de contact (S1) entre une embase en forme de disque (82), prévue dans une partie inférieure de la tête (80) et le ressort à disque à cône (10), et
une superficie de surface de contact (S3) entre la rondelle plate (11) et une surface d'appui (1b) sur une face supérieure de la culasse (1) est plus grande que la superficie de surface de contact (S2).

2. Moteur comme revendiqué dans la revendication 1, dans lequel le boulon de culasse (8) est engagé par filetage avec le carter de vilebrequin (4) en ayant été passé à travers le cylindre (3).

3. Moteur comme revendiqué dans la revendication 1 ou 2, dans lequel le boulon de culasse (8) est formé d'un seul tenant avec une tête (80) qui forme la partie de manœuvre de rotation (8a).

4. Moteur comme revendiqué dans la revendication 3, dans lequel le boulon de culasse (8) comprend un boulon de tête à embase ayant l'embase en forme de disque (82) prévue dans une partie inférieure de la tête (80), et le diamètre extérieur (R4) de l'embase (82), quand il est dans un état libre, est plus grand que le diamètre extérieur de l'organe ressort.

5. Moteur comme revendiqué dans l'une quelconque des revendications 1 à 4, dans lequel la rondelle plate (11) a une couche de revêtement de cuivre appliquée sur un matériau ferreux.
